# EUROPÄISCHE PATENTANMELDUNG

(11) **EP 2 607 303 A1**
(43) Veröffentlichungstag der Anmeldung: **26.06.2013**
(21) Anmeldenummer: 12199016.2
(22) Anmeldetag: 21.12.2012
(51) Int. Cl.: C01B 3/38, B01J 8/02

(54) **Verfahren zur Einspeicherung von Energie, die in Form von elektrischer Energie oder Wärme vorliegt, in ein Eduktgasgemisch sowie eine Vorrichtung zur Durchführung dieses Verfahrens**

(30) Priorität: 22.12.2011 DE 102011089656
(71) Anmelder: Friedrich-Alexander-Universität Erlangen-Nürnberg, 91054 Erlangen (DE)
(72) Erfinder: Karl, Jürgen, 91126 Schwabach (DE)
(74) Vertreter: Winter, Brandl, Fürniss, Hübner, Röss, Kaiser, Polte - Partnerschaft

(57) **Zusammenfassung**

Es wird ein Verfahren zur Einspeicherung von Energie, die in Form von elektrischer Energie oder Wärme vorliegt, in ein Eduktgasgemisch sowie eine Vorrichtung zur Durchführung dieses Verfahrens angegeben. Gemäß der Erfindung wird Energie, die in Form von elektrischer Energie oder Wärme vorliegt, chemisch in einem Eduktgasgemisch (z. B. Erdgas), das im wesentlichen Methan enthält, gebunden. Hierzu wird das in dem Eduktgasgemisch (4) enthaltene Methan unter Zugabe von Wasserdampf (16) in Wasserstoff, Kohlendioxid und Kohlenmonoxid mittels endothermer Teilreformierung (2) umgesetzt. Dadurch entsteht ein Produktgasgemisch (6). Die für diese Umsetzung notwendige Energie ist die in das Eduktgasgemisch einzuspeichernde Energie (8).

## Beschreibung

Die Einspeicherung von regenerativ erzeugtem Überschussstrom in das Erdgasnetz bietet eine der wenigen Möglichkeiten, regenerativ Energie aus fluktuierenden Quellen wie Windkraftanlagen und Fotovoltaik dauerhaft, d.h. über mehrere Wochen zu speichern. Bei dem von der Firma Solarfuel GmbH verfolgten und aus der WO 2009/065577A1 bekannten Ansatz wird die elektrische Energie aus Windkraftanlagen und Fotovoltaikanlagen zur Elektrolyse von Wasser und der Erzeugung von Wasserstoff verwendet. Der durch Elektrolyse erzeugte Wasserstoff wird dann zusammen mit Kohlendioxid aus der Luft in Methan umgesetzt und dem Erdgasnetz zugeführt. Dieses bekannte Verfahren erlaubt es, große Mengen elektrischer Energie als chemisch gebundene Energie im vorhandenen Erdgasnetz zu speichern. Allerdings ist die gesamte Prozesskette mit erheblichen Verlusten verbunden, da zum einen die Verluste der Elektrolyse und der Kompression nur als Wärme anfallen und auch bei der exothermen Methanierungsreaktion große Mengen an üblicherweise nur schwer nutz- und speicherbarer Abwärme anfallen.

Es ist daher Aufgabe der vorliegenden Erfindung, ein Verfahren zur Einspeicherung von elektrischer und/oder thermischer Energie in ein Eduktgasgemisch, z.B. Erdgas, anzugeben, das mit weniger Verlusten verbunden ist bzw. einen höheren Wirkungsgrad besitzt. Weiter ist es Aufgabe der vorliegenden Erfindung eine hierfür geeignete Vorrichtung anzugeben.

Die Lösung dieser Aufgabe erfolgt durch die Merkmale des Anspruchs 1 bzw. 13.

Dadurch, dass nur ein geringer Teil des im Eduktgasgemisch enthaltenen Methans umgesetzt wird und auch nur umgesetzt werden muss, ist der Verfahrensaufwand zur Durchführung der gewünschten chemischen Reaktionen gering. Da eine geringe Teilreformierung ausreichend ist, müssen keine Maßnahmen zur Verschiebung der Reaktion zu höheren Umsetzungsgraden von von Methan zu Wasserstoff getroffen werden. Durch den leicht erhöhten Wasserstoffanteil in dem Eduktgasgemisch nach der Teilreformierung wird zwar die volumetrische Gasqualität bzw. der Brennwert des entstehenden Produktgasgemisches verschlechtert, gleichzeitig wird jedoch die einzuspeichernde Energie mit geringen Verlusten als chemische Energie in dem Produktgasgemisch gespeichert. Das Verfahren ist insbesondere für Erdgas- oder Biogas als Eduktgasgemisch geeignet. Durch die Teilreformierung wird zwar die Gasqualität des Produktgasgemisch - im Vergleich zu dem Eduktgasgemisch - verschlechtert, d.h. der Brennwert ist schlechter, jedoch steigt auch das Volumen, d. h. die Gasmenge.

Das Eduktgasgemisch in dem die Energie eingespeichert wird ist vorzugsweise Biogas oder Erdgas. Durch entsprechende Wahl des geringen Umsetzungsgrades ergibt sich ein Produktgasgemisch mit einer Gaszusammensetzung, die eine Einspeisung in das Erdgasnetz erlaubt. Damit wird durch das Erdgas oder das Biogas das notwendige Methan bereitgestellt und gleichzeitig kann für das entstehende mit der einzuspeichernden Energie beladene Eduktgas die für Erdgas vorhandene Infrastruktur nutzen - Anspruch 3.

Der Grad der Umsetzung bzw. der Anteil des Methans das im Wege der Teilreformierung umgesetzt wird und damit die Gaszusammensetzung des Produktgasgemisches, kann durch die Wahl des Temperaturbereichs - Anspruch 4 - in dem die Teilreformierung durchgeführt wird und durch Wahl des Drucks im Reaktorbehälter - Anspruch 5 - während der Teilreformierung sowie durch die verwendeten Katalysatoren - Anspruch 6 - ausreichend genau eingestellt werden. Als Katalysatoren eignen sich insbesondere Ni-Katalysatoren, wie sie für Methanierungsprozesse eingesetzt werden. Durch die vergleichsweise geringen Reaktionstemperaturen zwischen 200°C und 600°C und vorzugsweise zwischen 250°C und 350°C und Reaktionsdrücken zwischen 1 bis70 bar und vorzugsweise zwischen 3-8 bar wird gewährleistet, dass nur ein bestimmter Teil -vorzugsweise 2% bis 5% - Anspruch 7 - des in dem Eduktgasgemisch enthaltenen Methans umgesetzt wird. Bei diesen Drücken und Temperaturen ist der verfahrens- und apparatetechnische Aufwand geringer als bei Reformierungsprozessen, die auf einen hohen Umsetzungsgrad hin ausgelegt sind. Folglich sind die Kosten geringer.

Durch die gezielte geringe Teilreformierung bzw. Umsetzung von Methan zu Wasserstoff kann sichergestellt werden, dass das entstehende Produktgasgemisch in das Erdgasnetz eingespeist werden kann - Anspruch 8.

Gemäß den vorteilhaften Ausgestaltungen nach Anspruch 9 stammt die einzuspeichernde Energie aus regenerativen Energiequellen, wie Windparks und Solarkraftwerken. Solche regenerativen Energiequellen liefern Energie oftmals zu Zeiten in den der Strombedarf nicht entsprechend hoch ist. Durch das Einspeichern dieser überschüssigen Energie in das Erdgasnetz kann die überschüssige Energie zwischengespeichert werden bis ein Bedarf dafür vorliegt.

Zusätzlich kann die in dem Erdgas ein- bzw. zwischengespeicherte Energie über das vorhandene Erdgasnetz zum Verbraucher transportiert und dort wieder mittels exothermer Methanierung wieder dem Ergas entzogen werden - Anspruch 11.

Durch die vorteilhafte Ausgestaltung der Erfindung nach Anspruch 10 wird in dem Produktgasgemisch enthaltene fühlbare Wärme zur Vorwärmung des Eduktgasmisches und zur Verdampfung des notwendigen Wassers genutzt - interner Wärmetausch. Dadurch werden die Wärmeverluste weiter verringert bzw. der Wirkungsgrad des Prozesses steigt.

Durch die vorteilhafte Ausgestaltung der Erfindung nach Anspruch 11 wird das Produktgasgemisch beim Verbraucher wieder re-methaniert. Die frei werdende Wärme der exothermen Methanierungsreaktion kann zur Erzeugung von Strom genutzt werden. Auf diese Weise wird die als chemische Energie gebundene Energie wieder in nutzbare Wärme umgesetzt.

Durch die vorteilhafte Ausgestaltung der Erfindung nach Anspruch 12 ergibt sich ein Mehrfachnutzen für den Reaktorbehälter und damit Kosteneinsparung. Über den Reaktorbehälter wird die einzuspeichernde Energie in das, Eduktgasgemisch eingespeichert, wodurch sich das Produktgasgemisch ergibt. Zeitlich versetzt kann der gleich Reaktorbehälter zur Methanierung bzw. Re-Methanierung genutzt werden, um die in dem Produktgasgemisch eingespeicherte Energie wieder freizusetzen.

Anspruch 13 hat eine Vorrichtung zur Durchführung des Verfahrens nach einem der vorhergehenden Ansprüche zum Gegenstand.

Dadurch dass die Reformierung nicht wie üblich bei Temperaturen im Bereich um 800°C vollständig abläuft, sondern bei niedrigeren Temperaturen im Bereich 200°C und 600°C nur teilweise, ergeben sich folgende Vorteile:
- zu hohe CO-Konzentrationen, die nach den DVGW Richtlinien < 1% sein müssen, werden verhindert;
- es können kostengünstigere Apparaturen eingesetzt werden;
- Wärmeverluste werden verringert, da die in dem Produktgasgemisch enthaltene fühlbare Wärme durch Wärmetausch zur Vorwärmung des Eduktgasgemisches genutzt werden kann;

Weitere Einzelheiten, Merkmale und Vorteile der Erfindung ergeben sich aus der nachfolgenden Beschreibung bevorzugter Ausführungsformen der Erfindung.

Es zeigt:
Fig. 1 eine schematische Darstellung der Energiebilanz des erfindungsgemäßen Verfahrens,
Fig. 2 eine grafische Darstellung der Veränderung des Brennwerts und der Dichte verschiedener Erdgassorten,
Fig. 3 eine Tabelle der Gaszusammensetzung verschiedener Erdgassorten als Eduktgasgemische und die entstehenden Zusammensetzungen der Produktgasgemische nach der Teilreformierung,
Fig. 4 eine grafische Darstellung der Abhängigkeit des Anteils von Wasserstoff und Kohlendioxid im Produktgasgemisch von der Reformierungstemperatur,
Fig. 5 eine schematische Darstellung einer ersten Ausführungsform der Erfindung,
Fig. 6 eine schematische Darstellung einer zweiten Ausführungsform der Erfindung, und
Fig. 7 eine schematische Darstellung einer dritten Ausführungsform der Erfindung.

Die Teilreformierung im Temperaturbereich zwischen 200°C und 600°C und vorzugsweise im Temperaturbereich zwischen 250°C und 350°C erfolgt gemäß der Reaktionsgleichung

CH₄ + H₂O → 3 H₂ + CO,

wobei 206,2 kJ/mol zugeführt in chemischer Energie gebunden werden. In dem niedrigen Temperaturbereich in dem die Teilreformierung durchgeführt wird, überlagert sich der endothermen Reformierung die endotherme umgekehrte Sabatier-Reaktion gemäß der Reaktionsgleichung

CH₄ + 2 H₂O → 4 H₂ + CO₂,

wobei 165,0 kJ/mol als chemische Energie gespeichert werden,
bzw. die Shift-Reaktion gemäß der Reaktionsgleichung

CO + H₂O → H₂ + CO₂.

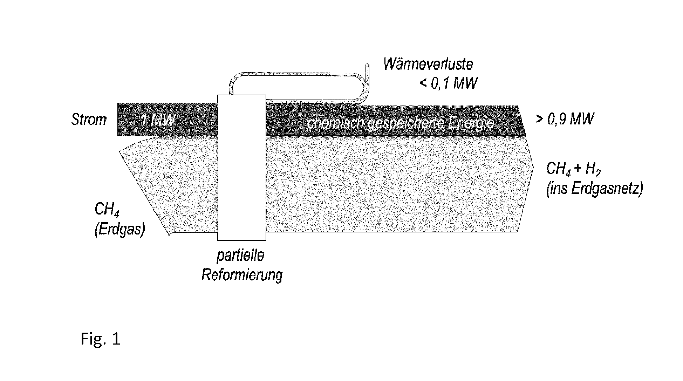

Diese Reaktionsabläufe ergeben die in Fig. 1 schematisch dargestellte Energiebilanz. Die Teilreformierung verläuft bei Drücken im Reaktorbehälter zwischen 1 bar und 70 bar und vorzugsweise zwischen 3 und 8 bar. Die Reaktionsdrücke und - temperaturen werden so gewählt, dass sich die gewünschten geringen Umsetzungsgrade von Methan zu Wasserstoff ergeben.

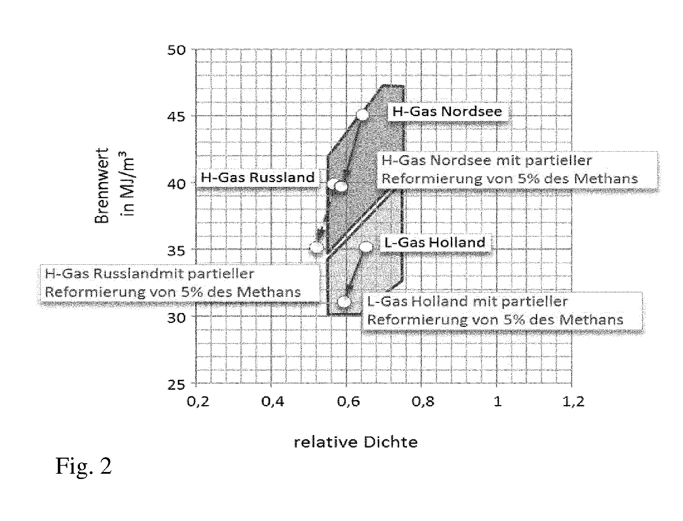

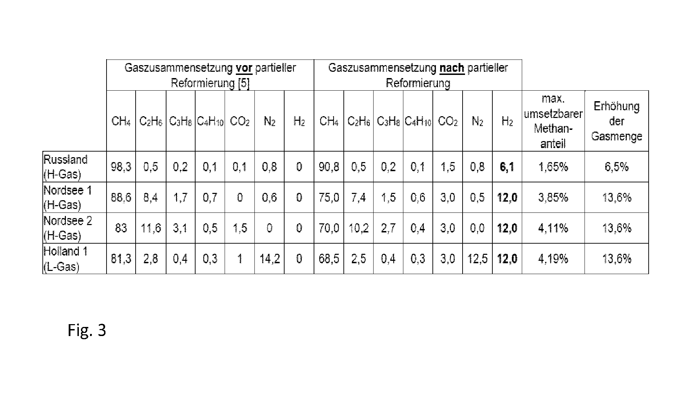

Fig. 2 und 3 zeigen die Zusammensetzung verschiedener Erdgassorten, die als Eduktgasgemisch zur Einspeicherung von Energie gemäß der vorliegenden Erfindung geeignet sind. Weiter sind die nach der DVGW-Richtlinie G260¹ maximal zulässigen bzw. die nach der Teilreformierung sich im Produktgasgemisch befindlichen Gasanteile aufgeführt.
¹ DVGW, Technische Regel, Arbeitsblatt G260, Gasbeschaffenheit, Mai 2008

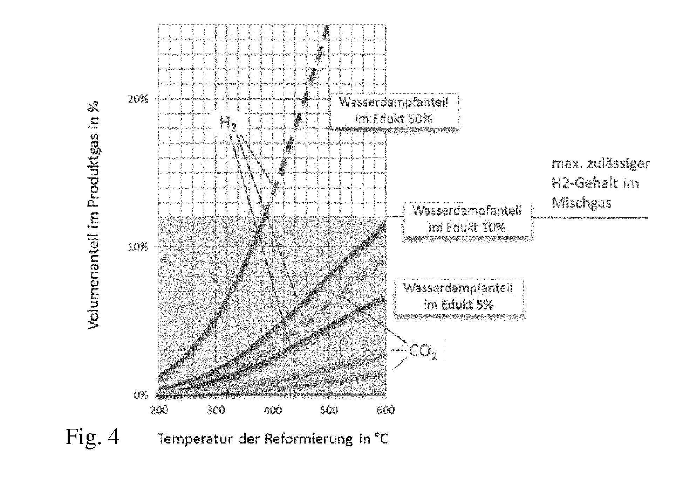

Fig. 4. zeigt grafisch die Abhängigkeit des Anteils von Wasserstoff und Kohlendioxid im Produktgasgemisch von der Reformierungstemperatur, wobei von Eduktgasgemischen mit unterschiedlichem Wasserdampfgehalt ausgegangen wird. Aus Fig. 4 wird deutlich, wie die Gaszusammensetzung im Produktgasgemisch durch die Reformierungstemperatur beeinflusst wird.

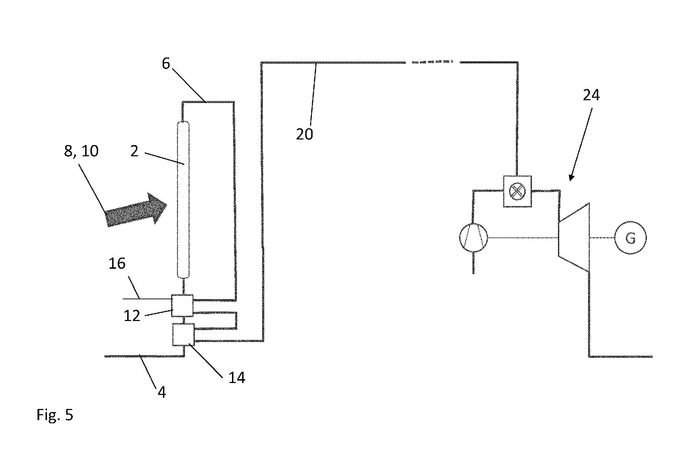

Fig. 5 zeigt schematisch eine erste Ausführungsform der Erfindung. Die partielle Reformierung bzw. die Teilreformierung wird in einem Reaktorbehälter 2 bei einer Reformierungstemperatur T_{R} und eine Refomierungsdruck p_{R} durchgeführt. Der Reaktorbehälter 2 umfasst eine Eduktgasgemischzuleitung 4 und eine Produktgasgemischableitung 6. Die für die endotherme Teilreformierung notwendige Energie, d. h. die in das Eduktgasgemisch einzuspeichernde Energie 8 liegt in Form von elektrischem Strom oder Prozesswärme aus regenerativen Energiequellen 10 vor. Die Produktgasableitung 6 durchläuft nach dem Reaktorbehälter 2 zunächst einen Dampferzeuger 12 und anschließend einen Gaskühler 14. Die Eduktgasgemischzuleitung 4 durchläuft zuerst den Gaskühler 14, dann den Dampferzeuger 12 und mündet anschließend in den Reaktorbehälter 2. Der Dampferzeuger 12 umfasst eine Wasserzuleitung 16. In dem Gaskühler 14 und dem

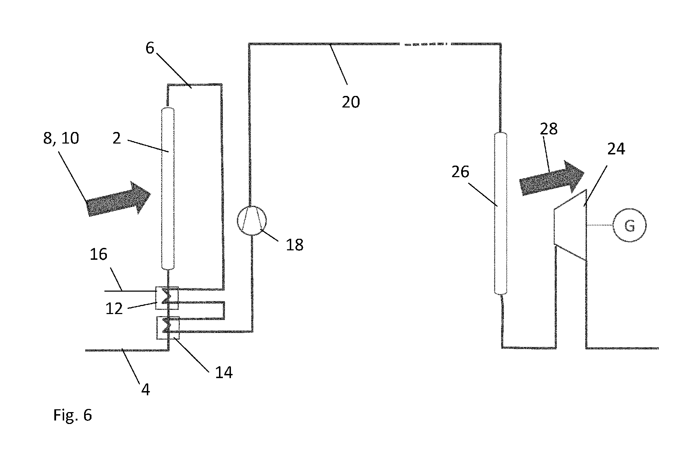

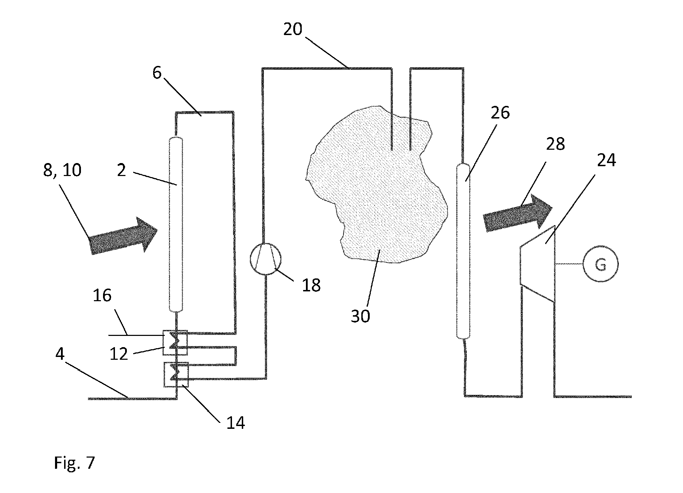

Dampferzeuger 12 wird das heiße Produktgasgemisch aus dem Reaktorbehälter 2 gekühlt. Die dem heißen Produktgasgemisch entzogene Wärme wird in dem Gaskühler 14 und dem Dampferzeuger 12 zur Vorwärmung des Eduktgasgemisches genutzt. In dem Dampferzeuger 12 wird zusätzlich das über die Wasserzuleitung 16 zugeführte Wasser verdampft und dem vorgewärmten Eduktgasgemisch zugesetzt. Das gekühlte Produktgasgemisch wird in das vorhandene Erdgasnetz 20 eingespeist. Sofern die Einspeisung in das Hochdruck-Netz (ca. 50 bar) erfolgt, muss das Produktgasgemisch mittels eines Kompressors 18 verichtet werden, wie dies in Fig. 6 und 7 gezeigt ist. Bei einem Verbraucher 22 kann mit dem Produktgasgemisch in einer Gasturbine 24 und eine Generator G in bekannter Weise elektrischer Strom und Wärme erzeugt werden.

Fig. 6 zeigt eine zweite Ausführungsform der Erfindung, die sich von der ersten Ausführungsform nach Fig. 5 lediglich dadurch unterscheidet, dass das Produktgasgemisch mit eingespeicherter Energie 8 vor dem Verbrauch zunächst in einem Methanierungsreaktor 26 methaniert wird. D. h. ein Teil des in dem Produktgasgemisch enthaltenen Wasserstoffs wird gemäß der Reaktionsgleichung

CO + 3 H₂ → CH₄ + H₂O,

in Methan und Wasserdampf umgesetzt. Die bei der exothermen Methanierung frei werdende Wärme 28 kann unmittelbar in einer Turbine 24 zur Erzeugung von Strom genutzt werden. Das sich ergebende mit Methan angereicherte Produktgasgemisch kann in gewohnter Weise verwendet und in elektrischen Strom und Wärme umgesetzt werden.

Fig. 7 zeigt eine zweite Ausführungsform der Erfindung, die sich von der zweiten Ausführungsform nach Fig. 6 lediglich dadurch unterscheidet, dass das gekühlte und komprimierte Produktgasgemisch vor dem endgültigen Verbrauch in einem Gasspeicher 30 zwischengespeichert wird.

Bei den Ausführungsformen nach den Figuren 5 bis 7 muss die Eduktgasgemischzuleitung nicht unbedingt durch den Dampferzeuger 12 geführt werden, d.h. die Eduktgasgemischzuleitung 4 mündet nach dem Gaskühler 14 direkt in den Reaktorbehälter 2.

### Bezugszeichenliste:

- 2: Reaktorbehälter
- 4: Eduktgasgemischzuleitung
- 6: Produktgasgemischableitung
- 8: einzuspeichernde Energie
- 10: regenerative Energiequelle
- 12: Dampferzeuger
- 14: Gaskühler
- 16: Wasserzuleitung
- 18: Kompressor
- 20: Erdgasnetz
- 22: Verbraucher
- 24: Gasturbine
- 26: Methanierungsreaktor
- 28: in 26 frei werdende Wärme
- 30: Gasspeicher
- G: Generator

## Patentansprüche

1. Verfahren zur Einspeicherung von Energie, die in Form von elektrischer Energie oder Wärme vorliegt, in ein Eduktgasgemisch, das im wesentlichen Methan enthält, durch teilweise Umsetzung des Methans unter Zugabe von Wasserdampf in Wasserstoff, Kohlendioxid und Kohlenmonoxid mittels endothermer Teilreformierung, wodurch ein Produktgasgemisch entsteht und wobei die für die endotherme Teilreformierung notwendige Energie die in das Eduktgasgemisch einzuspeichernde Energie ist.

2. Verfahren nach Anspruch 1, **dadurch gekennzeichnet, dass** aufgrund der Reaktionstemperatur der endothermen Reformierung gemäß der Reaktionsgleichung
CH₄ + H₂O → 3 H₂ + CO
die endotherm ablaufende, umgekehrte Sabatier-Reaktion gemäß der Reaktionsgleichung
CH₄ + 2 H₂O → 4 H₂ + CO₂
bzw. die Shift-Reaktion gemäß der Reaktionsgleichung
CO + H₂O → H₂ + CO₂
überlagert ist.

3. Verfahren nach Anspruch 1 oder 2, **dadurch gekennzeichnet, dass** das Eduktgasgemisch Erdgas und/oder Biogas ist

4. Verfahren nach einem der vorhergehenden Ansprüche, **dadurch gekennzeichnet, dass** der Anteil des durch die endotherme Teilreformierung erzeugten Wasserstoffs durch die Reaktionstemperatur der endothermen Teilreformierung gesteuert wird, und dass die Teilreformierung bei Temperaturen zwischen 200°C und 600°C und vorzugsweise zwischen 250°C und 350°C erfolgt.

5. Verfahren nach einem der vorhergehenden Ansprüche, **dadurch gekennzeichnet, dass** der Anteil des durch die endotherme Teilreformierung erzeugten Wasserstoffs durch den Druck gesteuert wird, bei dem die endotherme Teilreformierung abläuft, und dass die Teilreformierung bei Drücken zwischen 1 bar und 70 bar und vorzugsweise zwischen 3 bar und 8 bar erfolgt.

6. Verfahren nach einem der vorhergehenden Ansprüche, **dadurch gekennzeichnet, dass** die Teilreformierung durch Katalysatoren gefördert wird.

7. Verfahren nach einem der vorhergehenden Ansprüche, **dadurch gekennzeichnet, dass** durch die Teil-Reformierung zwischen 1% und 8% und vorzugsweise zwischen 2% und 5% des in dem Eduktgasgemisch enthaltenen Methans umgesetzt wird.

8. Verfahren nach einem der vorhergehenden Ansprüche, **dadurch gekennzeichnet, dass** das nach der Teilreformierung entstehende Gasgemisch noch den Richtlinien für die Erdgasqualität gemäß der DVGW-Richtlinie, Technische Regel, Arbeitsblatt G 260, Gasbeschaffenheit, Mai 2008 entspricht.

9. Verfahren nach einem der vorhergehenden Ansprüche, **dadurch gekennzeichnet, dass** die einzuspeichernde Energie aus regenerativen Energiequellen und insbesondere aus Windstromanlagen und Solarkraftwerken stammt.

10. Verfahren nach einem der vorhergehenden Ansprüche, **dadurch gekennzeichnet, dass** zur Vorwärmung des Eduktgasgemisches und zur Verdampfung des zugegeben Wassers dem Produktgas Wärme entzogen wird.

11. Verfahren nach einem der vorhergehenden Ansprüche, **dadurch gekennzeichnet, dass** der in dem entstehenden Produktgasgemisch enthaltener Wasserstoff und Kohlendioxid vor Verbrauch des Produktgasgemisches durch eine exotherme Methanierung wenigstens teilweise in Methan und Wasserdampf umgesetzt wird.

12. Verfahren nach Anspruch 11, **dadurch gekennzeichnet, dass** für die Teil-Reformierung und Methanierung der gleiche Reaktorbehälter genutzt wird.

13. Vorrichtung zur Durchführung des Verfahrens nach einem der vorhergehenden Ansprüche, mit
einem Reaktorbehälter (2) zur Durchführung der Teil-Reformierung,
einer Wärmezufuhreinrichtung zur Zufuhr der einzuspeichernden Energie, die thermisch mit dem Reaktorbehälter (2) gekoppelt ist,
einer Eduktgasgemischzuleitung (4),
einer Produktgasgemischableitung (6),
einem Dampferzeuger (12) mit einer Wasserzuleitung (16) zur Zuführung von Wasserdampf zu dem Eduktgasgemisch, wobei der Dampferzeuger (12) thermisch mit der Produktgasgemischableitung (6) gekoppelt ist,
einem Gaskühler (14) in dem Eduktgasgemischzuleitung (4) und Produktgasgemischableitung (6) geführt sind,
wobei die Produktgasgemischableitung (6) zunächst durch den Dampferzeuger (12) und danach durch den Gaskühler (14) führt.

14. Vorrichtung nach Anspruch 13, **dadurch gekennzeichnet, dass** die Eduktgasmischzuleitung (4) und Produktgasgemischableitung (6) im Gaskühler (14) im Gegenstrom geführt sind.

15. Vorrichtung nach Anspruch 13 oder 14, **dadurch gekennzeichnet, dass** die Eduktgasgemischzuleitung (4) durch den Dampferzeuger (12) geführt ist, und dass die Eduktgasmischzuleitung (4) zunächst durch den Gaskühler (14) und danach durch den Dampferzeuger (12) führt.
